# EUROPÄISCHE PATENTSCHRIFT

(11) **EP 3 933 349 B1**
(45) Veröffentlichungstag und Bekanntmachung des Hinweises auf die Patenterteilung: **06.03.2024**
(21) Anmeldenummer: 21179947.3
(22) Anmeldetag: 17.06.2021
(51) Int. Cl.: G01F 1/32, G01F 15/00, G01F 15/18

(54) **VORRICHTUNG ZUR VOLUMENSTROMMESSUNG UND MODUL ZUR WASSERERWÄRMUNG MIT EINER SOLCHEN VORRICHTUNG**
VOLUMETRIC FLOW MEASURING DEVICE AND WATER HEATING MODULE USING SUCH A DEVICE
DISPOSITIF DE MESURE DE DÉBIT VOLUMIQUE ET MODULE DE CHAUFFAGE D'EAU DOTÉ D'UN TEL DISPOSITIF

(30) Priorität: 03.07.2020 DE 202020103873 U
(43) Veröffentlichungstag der Anmeldung: 05.01.2022
(73) Patentinhaber: Gebr. Kemper GmbH + Co. KG, 57462 Olpe (DE)
(72) Erfinder: STRUWE, Andreas, 57368 Lennestadt (DE)
(74) Vertreter: Grünecker Patent- und Rechtsanwälte PartG mbB

(56) Entgegenhaltungen:
- EP-A1- 2 843 141
- WO-A2-2008/042274
- DE-A1-102004 019 521
- DE-A1-102017 130 346
- US-A- 5 127 173
- US-A1- 2005 222 782
- US-A1- 2008 184 792
- US-A1- 2010 089 459

## Beschreibung

Die vorliegende Erfindung betrifft eine Vorrichtung zur Volumenstrommessung eines Volumenstroms durch eine Wasserleitung.

Die in solchen Vorrichtungen, wie beispielsweise in der DE 10 2004 019521 A1 offenbart, üblicherweise eingesetzten Durchflusssensoren verfügen in der

Regel über einen Messbereich, der einen Mindestdurchfluss erfordert. Kleine Durchflussmengen durch die Wasserleitung können daher oft nur ungenau oder gar nicht registriert werden. Für gewöhnlich ist die Wasserleitung Teil einer Trink- und Brauchwasserinstallation zur Versorgung mindestens eines Verbrauchers mit warmem und kaltem Wasser. Um Wärmeverluste des warmen Wassers zu vermeiden, wird es in der Regel durch eine Zirkulationspumpe in den Wasserleitungen in Zirkulation gehalten. In dem Zirkulationskreislauf ist ein Wärmeübertrager angeordnet, der das warme Wasser auf eine hygienisch unbedenkliche Temperatur erwärmt, üblicherweise auf ≥ 55° C. Auch das kalte Trinkwasser kann durch eine Zirkulationspumpe zirkuliert und zu einer Kühleinrichtung rückgeführt werden, um zu vermeiden, dass es sich auf eine Temperatur erwärmt, bei der Bakterienwachstum begünstigt ist. Zur Regelung der Zirkulationspumpe wird oftmals ein gemessener Volumenstrom durch eine der Wasserleitungen herangezogen.

Da kleine Durchflussmengen mit den üblicherweise eingesetzten Sensoren nur ungenau oder gar nicht registriert werden können, nimmt die Effizienz des Systems - insbesondere die Regelgenauigkeit der Zirkulationspumpe - zumindest bei kleinen Volumenströmen ab.

Eine Aufgabe der vorliegenden Erfindung ist es daher, eine Vorrichtung zur verbesserten Volumenstrommessung eines Volumenstroms durch eine Wasserleitung anzugeben. Insbesondere soll der messbare Bereich der Vorrichtung auch kleine Durchflussmengen umfassen. Zur Lösung dieser Aufgabe schlägt die vorliegende Erfindung eine Vorrichtung mit den Merkmalen von Anspruch 1 vor.

Die erfindungsgemäße Vorrichtung umfasst eine Wasserleitung mit einer Einlass- und einer Auslassöffnung sowie einer Einfädel- und einer Ausfädelöffnung, die zwischen der Einlass- und der Auslassöffnung vorgesehen sind. Die Wasserleitung umfasst üblicherweise ein im Wesentlichen gerades Rohr. Die beiden Enden des Rohrs in Längsrichtung bilden üblicherweise die Einlass- und die Auslassöffnung aus, die dementsprechend in Verlängerung zueinander vorgesehen sind. Die Einfädel- und die Ausfädelöffnung sind üblicherweise am Umfang der Wasserleitung bzw. des Rohrs vorgesehen und in der Regel von jeweils einem quer zur Längserstreckung des Rohrs abgehenden Anschlussstutzen ausgebildet.

Die Wasserleitung kann auch mehrteilig sein. Beispielsweise kann die Wasserleitung ein gerades Rohr und zwei mit jeweils einem Ende des Rohrs verbundene Absperrhähne mit jeweils einem Drei-Wege-Ventil umfassen, wobei der eine Absperrhahn die Einlassöffnung und die Ausfädelöffnung und der andere Absperrhahn die Auslassöffnung und die Einfädelöffnung ausbilden. Auch bei einer mehrteiligen Ausgestaltung der Wasserleitung sind die Einlass- und die Auslassöffnung für gewöhnlich in Verlängerung zueinander, d.h. sich in gerader Linie gegenüberliegend, vorgesehen und die Einfädel- und die Ausfädelöffnung gehen üblicherweise quer zu einer Verbindungslinie zwischen der Einlass- und der Auslassöffnung ab.

Die erfindungsgemäße Vorrichtung umfasst des Weiteren eine mit der Einfädelöffnung und der Ausfädelöffnung verbundene Bypassleitung und ein in der Wasserleitung und zwischen der Einfädel- und der Ausfädelöffnung vorgesehenes Strömungswiderstandselement. Das Strömungswiderstandselement bewirkt, dass bei einer Durchströmung der Wasserleitung mindestens auch die Bypassleitung durchströmt wird. D.h. der Volumenstrom durch die Wasserleitung wird in eine in im Wesentlichen gerader Richtung zwischen der Einlass- und der Auslassöffnung verlaufende Hauptströmung und eine Teilströmung, die durch den Bypass fließt und so das Strömungswiderstandselement umgeht, aufgeteilt. Das Strömungswiderstandselement kann auch so ausgestaltet sein, dass der Strömungsweg für die Hauptströmung bei kleinen Volumenströmen absperrbar ist und im Wesentlichen der komplette Volumenstrom durch die Bypassleitung geleitet wird.

Bevorzugt ist die Wasserleitung und/oder die Bypassleitung aus Metall, insbesondere Edelstahl, Rotguss und/oder Kupfer hergestellt. Die Wasserleitung und/oder die Bypassleitung kann aber auch ein Kunststoffrohr aufweisen oder durch ein solches gebildet sein. Die Wasserleitung hat für gewöhnlich einen Nenndurchmesser von DN 15, 18, 22, 28, 35, 42 oder 54. Die Bypassleitung kann einen um mindestens einen Nenndurchmessersprung kleineren Nenndurchmesser haben.

In der Bypassleitung ist erfindungsgemäß ein Durchflusssensor vorgesehen. Durch die Aufteilung in Haupt- und Teilströmung eignet sich ein Durchflusssensor mit einem kleineren registrierbaren Mindestdurchfluss für den Einsatz in der Bassleitun. Erfindungsgemäß ist ein auf dem Vortex-Messprinzip basierender Durchflusssensor vorgesehen.

Auf Basis einer vorab bestimmten Strömungscharakteristik der Vorrichtung wird dann von dem gemessenen Volumenstrom durch die Bypassleitung auf den Volumenstrom der Hauptströmung bzw. auf den Gesamtvolumenstrom zwischen der Einlass- und der Auslassöffnung geschlossen. Der durch die Wasserleitung fließende Volumenstrom wird gemäß der Erfindung mindestens teilweise durch die Bypassleitung geleitet, wo er mit einem für kleinere Volumenströme sensitiven Sensor gemessen wird. Die Messgenauigkeit und/oder der messbare Bereich werden dadurch erhöht. Bevorzugt ist mit der erfindungsgemäßen Vorrichtung ein Gesamtvolumenstrom durch die Wasserleitung in einem Messbereich von 0 bis 100 l/min messbar. Die Messgenauigkeit beträgt vorzugsweise ± 1 l/min und weiter bevorzugt ± 0,5 l/min. Weiter bevorzugt ist die Vorrichtung in baulicher Einheit mit einem Gerätegehäuse vorgesehen, welches die Vorrichtung einhaust und an welchem vorzugsweise Anschlussstutzen für die Leitung und ggf. Daten- und/oder Ladeanschlüsse und/oder Bedienelemente freiliegen. Nach einer bevorzugten Weiterbildung der vorliegenden Erfindung ist der Durchflusssensor Bestandteil eines Durchflussmessers mit einem Messumformer, wobei der Messumformer die Signale des Durchflusssensors als Eingangsgröße empfängt und eine Ausgangsgröße an eine Logikeinheit weiterleitet, die die Ausgangsgröße des Messumformers auf Basis einer in der Logikeinheit hinterlegten Strömungscharakteristik in einen durch die Leitung fließenden Gesamtvolumenstrom umrechnet. Somit wird auf Basis einer Messung des Volumenstroms der Teilströmung auf den Gesamtvolumenstrom geschlossen, der die Summe aus dem Volumenstrom der Teilströmung und dem Volumenstrom der Hauptströmung ist. Vorzugsweise umfasst die Vorrichtung eine Ausgabeeinheit, die den von der Logikeinheit berechneten Gesamtvolumenstrom an einer Außenseite des Gerätegehäuses anzeigt.

Nach einer weiteren bevorzugten Weiterbildung der vorliegenden Erfindung weist das Strömungswiderstandselement ein motorgesteuertes Ventil auf. Erfindungsgemäß ist ein bewegliches Widerstandselement vorgesehen. Das bewegliche Widerstandselement ist flexibel ausgebildet, sodass die Durchtrittsfläche dynamisch anpassbar ist. Dabei ist die Flexibilität dergestalt, dass sich der Strömungsquerschnitt durch den vorherrschenden Fluiddruck selbstständig anpasst. Ein flexibles Strömungswiderstandselement im Sinne der Anmeldung kann beispielsweise durch eine Hülse, die ein Ende mit einer elastischen Umfangswandung aufweist, wie grundsätzlich aus EP 2 843 141 A1 bekannt, oder durch einen in Hauptströmungsrichtung beweglichen und relativ zu einem Ventilsitz vorgespannten Ventilkörper gebildet sein. Das bewegliche Strömungswiderstandselement kann insbesondere wie aus der auf die Anmelderin zurückgehenden DE 20 2011 002 327 U1 bekannt ausgestaltet sein.

Üblicherweise ist die Bypassleitung im Falle eines solchen beweglichen Strömungswiderstandselement als Ringleitung ausgebildet. Aufgrund des Venturi-Effekts wird an der Einfädelöffnung Fluid aus der Ringleitung in die Hauptströmung eingesogen und damit einhergehend eine Teilströmung der an der Ausfädelöffnung in die Ringleitung abgezweigt. Jedenfalls wird die kleinste Durchtrittsfläche des beweglichen Strömungswiderstandselements abhängig von dem Volumenstrom und aufgrund der vorherrschenden Strömung in der Wasserleitung so verändert, dass die kleinste Durchtrittsfläche bei kleinem Volumenstrom kleiner ist als bei einem größeren Volumenstrom. Diese Veränderung ergibt sich in der Regel als Reaktion eines elastisch vorgespannten und die Durchtrittsfläche verändernden Elements. Diese dynamische Strömungsaufteilung führt in der Regel zu einem im Wesentlichen linearen Verhältnis zwischen der Hauptströmung und der Teilströmung zumindest im Bereich eines kleinen Gesamtvolumenstroms.

Nach einer weiteren bevorzugten Weiterbildung der vorliegenden Erfindung weist das Strömungswiderstandselement ein motorgesteuertes Ventil auf, dessen Steuerung so eingerichtet ist, dass das Ventil bei Erreichen eines vorbestimmten Gesamtvolumenstroms geöffnet wird und unterhalb des vorbestimmten Gesamtvolumenstroms geschlossen bleibt. Vorzugsweise liegt der vorbestimmte Gesamtvolumenstrom bei 12 l/min ± 1 l/min, bevorzugt ± 0,5 l/min. Unterhalb des vorbestimmten Gesamtvolumenstroms bleibt das Ventil geschlossen, sodass der gesamte Volumenstrom durch die Bypassleitung fließt und dort von dem Durchflusssensor gemessen wird. Der Gesamtvolumenstrom entspricht dann dem in der Bypassleitung gemessenen Volumenstrom. Bei Erreichen des vorbestimmten Gesamtvolumenstroms wird das Ventil geöffnet, um den Druckverlust über die Wasserleitung möglichst gering zu halten. Der Gesamtvolumenstrom ergibt sich dann anhand des obig beschriebenen Rückschlusses anhand der vorab ermittelten Strömungscharakteristik.

Weiter bevorzugt verringert sich der Durchmesser der Wasserleitung an der Ausfädelöffnung und weitet sich an der Einfädelöffnung wieder auf. Dies bewirkt eine Drosselung der Hauptströmung und einen Sogeffekt an der Einfädelöffnung. Dadurch stabilisiert sich das Übersetzungsverhältnis zwischen Hauptströmung und Teilströmung, sodass ein genauer Rückschluss von der gemessenen Teilströmung auf die Hauptströmung möglich ist.

Nach einer weiteren bevorzugten Weiterbildung der vorliegenden Erfindung ist ein zweiter Durchflusssensor vorgesehen, der in der Wasserleitung angeordnet ist. Dieser zweite Durchflusssensor ist üblicherweise in Strömungsrichtung vor der Ausfädelöffnung oder nach der Einfädelöffnung vorgesehen, sodass er den Gesamtvolumenstrom misst. Der zweite Durchflusssensor hat bevorzugt einen messbaren Mindestdurchfluss von circa 10 l/min. So kann der Gesamtvolumenstrom jedenfalls ab ca. 10 l/min wie an sich bekannt allein durch den zweiten Durchflusssensor bestimmt werden. Vorzugsweise ist der zweite Durchflusssensor zwischen der Einlassöffnung und der Ausfädelöffnung vorgesehen.

Nach einer weiteren bevorzugten Weiterbildung der vorliegenden Erfindung sind die Bypassleitung und die Wasserleitung von einem gemeinsamen Leitungsgehäuse einteilig ausgebildet. Das Leitungsgehäuse ist vorzugsweise aus einer Kupferlegierung, insbesondere Rotguss, Edelstahl oder einem für Trinkwasser zugelassenen Kunststoff gebildet.

Nach einer weiteren bevorzugten Weiterbildung der vorliegenden Erfindung bildet das Leitungsgehäuse einen quer zu der Wasserleitung abragenden und vorzugsweise der Bypassleitung gegenüberliegenden Anschlussstutzen zum Anschluss eines Sicherheitsventils für eine Druckentlastung aus. Über das Sicherheitsventil kann Wasser abgelassen werden, sofern der Wasserdruck in der Leitung einen vorbestimmten Druck übersteigt und bevor die Leitung und/oder daran angeschlossene Armaturen oder Sensoren Schaden nehmen. Der Wasserdruck in der Leitung kann grundsätzlich durch Erwärmen des Wassers ansteigen und sofern die Wasserleitung in einen geschlossenen Kreislauf eingebunden ist und kein Wasser aus dem Kreislauf entnommen wird, auf ein kritisches Niveau ansteigen.

Nach einer weiteren bevorzugten Weiterbildung der vorliegenden Erfindung ist die Bypassleitung frei von Zapfstellen. Sie ist in der Regel mit Ausnahme der Schnittstelle für den Durchflusssensor und ggf. einer mit einem Stopfen verschlossenen Entlüftungsöffnung über ihre Gesamtlänge umfänglich geschlossen. Auch die Wasserleitung ist üblicherweise frei von Zapfstellen. Die Länge der von dem Leitungsgehäuse ausgebildeten Wasserleitung ist vorzugsweise kleiner als 1 m, und bevorzugt zwischen 20 cm und 30 cm. Weiter bevorzugt ist die Bypassleitung nicht länger als die Wasserleitung. Als Länge wird hierbei die Länge des Strömungswegs in Strömungsrichtung verstanden. Ein Durchmesser des Leitungsgehäuses beträgt vorzugsweise zwischen 10 cm und 30 cm, besonders bevorzugt ca. 15 cm.

Nach einer weiteren bevorzugten Weiterbildung der vorliegenden Erfindung hat die Bypassleitung einen im Wesentlichen konstanten Durchmesser. Weiter bevorzugt sind die Durchflusssensoren als Vortex-Durchflussmesser ausgebildet.

In einem nebengeordneten Aspekt gibt die vorliegenden Erfindung ein Modul zur Wassererwärmung an. Das Modul umfasst einen Wärmeübertrager, der einen Primärbereich und einen Sekundärbereich aufweist, eine Pumpe zur Zuführung eines Primärmediums zu dem Primärbereich, eine Vorrichtung nach einem der vorherigen Ansprüche, wobei die Vorrichtung zur Zuleitung von Wasser als Sekundärmedium mit dem Sekundärbereich des Wärmeübertragers kommuniziert, und eine steuerungsmäßig mit der Pumpe verbundene Steuerungseinheit, die dazu angepasst eingerichtet ist, die Pumpe in Abhängigkeit eines durch die Messsignale eines der Durchflusssensoren generierten Wasserdurchflusses durch die Wasserleitung zu steuern. Somit lässt sich die durch das Primärmedium bereitgestellte Wärmemenge an die tatsächliche benötigte Wärmemenge zur Wassererwärmung anpassen. Die Steuerungseinheit beinhaltet vorzugsweise die Logikeinheit zur Umrechnung des Teilvolumenstroms durch die Bypassleitung in einen Gesamtvolumenstrom durch die Wasserleitung.

Das Primärmedium ist üblicherweise Heizungswasser. Als Primärmedium kann beispielsweise auch ein Glykolgemisch, Solewasser oder dergleichen eingesetzt werden. Das Sekundärmedium ist üblicherweise Wasser mit Trinkwasserqualität.

Bevorzugt weist das Modul ein Absperrventil auf, das in einer Zuführleitung zu der Vorrichtung vorgesehen ist, wobei sich der Leitungsdurchmesser von dem Absperrventil hin zu dem zweiten Durchflusssensor nicht vergrößert. Der im Wesentlichen konstante oder kleiner werdende Leitungsdurchmesser zwischen dem Absperrventil und dem zweiten Durchflusssensor führt dazu, dass Störungen vermieden werden, die sich negativ auf die Messergebnisse auswirken können.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Fig. 1: eine Seitenansicht eines ersten Ausführungsbeispiels,
- Fig. 2: eine Seitenansicht eines zweiten Ausführungsbeispiels,
- Fig. 3: eine Längsschnittansicht eines dritten Ausführungsbeispiels,
- Fig. 4: eine Seitenansicht einer Erweiterung des dritten Ausführungsbeispiels,
- Fig. 5: eine Seitenansicht eines Moduls zur Wassererwärmung mit einer Vorrichtung nach dem dritten Ausführungsbeispiel, und
- Fig. 6: das Modul nach Fig. 5 mit weggelassener vorderer Abdeckung des Gerätegehäuses.

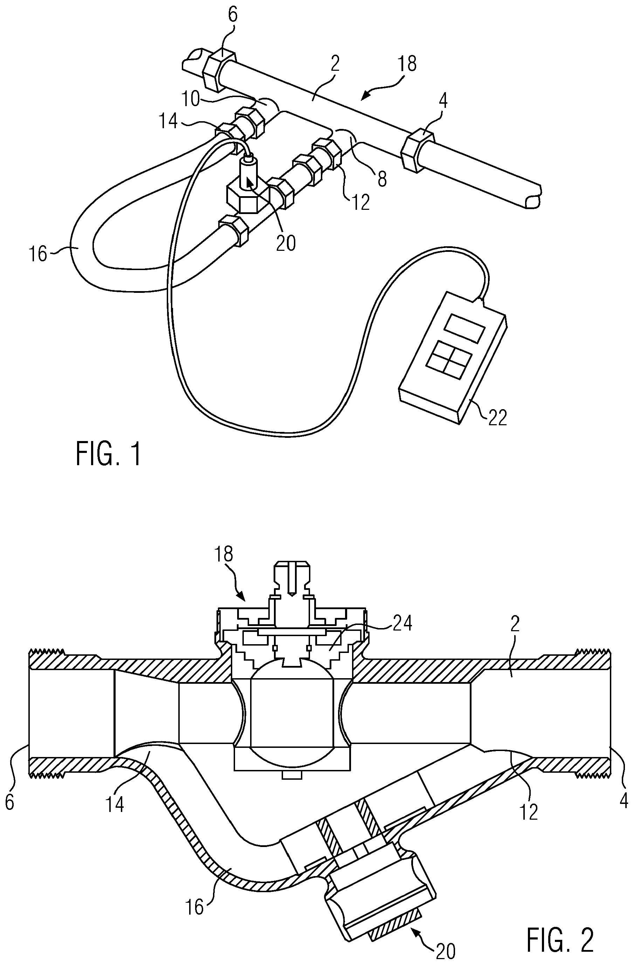

Die Figur 1 zeigt ein erstes Ausführungsbeispiel mit einer im Wesentlichen geraden Wasserleitung 2, die an einem Ende eine Einlassöffnung 4 und an einem in Längsrichtung der Wasserleitung 2 gegenüberliegenden Ende eine Auslassöffnung 6 ausbildet, welche an eine beliebige Leitung eines Trink- und Brauchwassersystems angeschlossen werden können. Die Wasserleitung 2 weist zwei Anschlussstutzen 8, 10 auf, die von einer Mantelfläche der Wasserleitung 2 quer zur Längsrichtung der Wasserleitung 2 abgehen und in Längsrichtung der Wasserleitung 2 zwischen der Einlassöffnung 4 und der Auslassöffnung 6 vorgesehen sind. Der der Einlassöffnung 4 nähere Anschlussstutzen 8 bildet eine Ausfädelöffnung 12 aus und der der Auslassöffnung 6 nähere Anschlussstutzen 10 bildet eine Einfädelöffnung 14 aus. Die Einfädel- und die Ausfädelöffnung 12, 14 sind mit einer Bypassleitung 16 verbunden.

Die Bypassleitung 16 ist in dem ersten Ausführungsbeispiel durch einen Schlauch mit Nenndurchmesser DN 10 verwirklicht. Der Nenndurchmesser der Wasserleitung 2 beträgt in diesem Ausführungsbeispiel DN 32.

Die Vorrichtung nach der vorliegenden Erfindung kann in baulicher Einheit in einem Gerätegehäuse vorgesehen sein, an welchem Anschlussstutzen freiliegen. Das Gerätegehäuse kann eine wärmedämmende Funktion haben.

In der Wasserleitung 2 ist ein (nicht-dargestelltes) Strömungswiderstandselement 18 vorgesehen, das zwischen der Einfädel- und der Ausfädelöffnung 12, 14 angeordnet ist und als Strömungsteiler wirkt. Eine durch die Einlassöffnung 4 in die Wasserleitung 2 einfließende Strömung wird aufgrund des Strömungswiderstandselement 18 in eine die Wasserleitung 2 in ihrer Längsrichtung gerade durchströmende Hauptströmung und eine das Strömungswiderstandselement 18 durch die Bypassleitung 16 umgehende Teilströmung aufgeteilt. Das Strömungswiderstandselement 18 nach diesem Ausführungsbeispiel ist ein dynamischer Strömungsteiler und wie aus DE 20 2011 002 327 U1 bekannt ausgestaltet.

In der Bypassleitung 16 ist ein Vortex-Durchflusssensor 20 mit einem Messbereich von 0,9 bis 15 l/min vorgesehen, der durch ein Kabel mit einem Messgerät 22 verbunden ist, das einen Messumformer und eine Logikeinheit aufweist. Die von dem Durchflusssensor 20 gemessenen Signale werden an das Messgerät 22 gesendet, von dem Messumformer in einen Volumenstrom der Teilströmung umgewandelt, der von der Logikeinheit anhand einer auf dem Messgerät hinterlegten Strömungscharakteristik zwischen Haupt- und Teilströmung in einen die Wasserleitung durchfließenden Gesamtvolumenstrom umgerechnet und ausgegeben wird.

Die Figur 2 zeigt ein zweites Ausführungsbeispiel mit einer im Wesentlichen geraden Wasserleitung 2, die an einem Ende eine Einlassöffnung 4 und an einem in Längsrichtung der Wasserleitung 2 gegenüberliegenden Ende eine Auslassöffnung 6 ausbildet, welche an eine beliebige Leitung eines Trink- und Brauchwassersystems anschließbar sind. Hierfür weist die Wasserleitung an der Einlass- und der Auslassöffnung 4, 6 jeweils ein Außengewinde auf.

Die Wasserleitung 2 weist an einer Mantelfläche der Wasserleitung 2 eine sich quer zur Längsrichtung der Wasserleitung 2 erstreckende Ausfädelöffnung 12 und eine sich quer zur Längsrichtung der Wasserleitung 2 erstreckende Einfädelöffnung 14 auf, wobei die Ausfädelöffnung 12 der Einlassöffnung 4 und die Einfädelöffnung 14 der Auslassöffnung 6 näher ist. Eine Bypassleitung 16 verbindet die Ausfädel- mit der Einfädelöffnung 12, 14. In diesem Ausführungsbeispiel ist die Bypassleitung 16 einteilig mit der Wasserleitung 2 ausgebildet. Wie im ersten Ausführungsbespiel beträgt der Nenndurchmesser der Bypassleitung 16 DN 10 und der Nenndurchmesser der Wasserleitung 2 DN 32.

In der Wasserleitung 2 ist ein Strömungswiderstandselement 18 vorgesehen, das zwischen der Einfädel- und der Ausfädelöffnung 12, 14 angeordnet ist und als Strömungsteiler wirkt. Eine durch die Einlassöffnung 4 in die Wasserleitung 2 einfließende Strömung wird aufgrund des Strömungswiderstandselement 18 in eine die Wasserleitung 2 in ihrer Längsrichtung gerade durchströmende Hauptströmung und eine das Strömungswiderstandselement 18 durch die Bypassleitung 16 umgehende Teilströmung aufgeteilt. Das Strömungswiderstandselement 18 nach diesem Ausführungsbeispiel ist ein motorgesteuertes Ventil 24.

Wie in dem ersten Ausführungsbeispiel ist in der Bypassleitung 16 ein (schematisch dargestellter) Vortex-Durchflusssensor 20 mit einem Messbereich von 0,9 bis 15 l/min vorgesehen, der durch ein (nicht-dargestelltes) Kabel mit einem (nicht-dargestellten) Messgerät 22 verbunden ist, das einen Messumformer und eine Logikeinheit aufweist. Der Vortex-Durchflusssensor ist vorliegend in einen von der Bypassleitung 16 ausgebildeten Anschlussstutzen eingeschraubt. Die von dem Durchflusssensor 20 gemessenen Signale werden an das Messgerät 22 gesendet, von dem Messumformer in einen Volumenstrom der Teilströmung umgewandelt, der von der Logikeinheit anhand einer auf dem Messgerät hinterlegten Strömungscharakteristik zwischen Haupt- und Teilströmung in einen die Wasserleitung durchfließenden Gesamtvolumenstrom umgerechnet und ausgegeben wird.

Der Durchmesser der Wasserleitung 2 verringert sich an der Ausfädelöffnung 12 und weitet sich an der Einfädelöffnung 14 wieder auf. Die Hauptströmung wird dadurch gedrosselt und lineares Übersetzungsverhältnis zwischen Teil- und Hauptströmung stellt sich ein. Des Weiteren ist die Steuerung des motorgesteuerten Ventils 24 nach diesem Ausführungsbeispiel dazu eingerichtet, das Ventil 24 bis zu einem Gesamtvolumenstrom von ca. 12 l/min geschlossen zu halten. Dementsprechend werden kleine Volumenströme von ca. < 12 l/min komplett durch die Bypassleitung 16 geleitet, sodass der gemessene Volumenstrom in der Bypassleitung 16 dem Gesamtvolumenstrom entspricht. Ab 12 l/min erfolgt die Bestimmung des Gesamtvolumenstroms dann analog zum ersten Ausführungsbeispiel anhand der Strömungscharakteristik zwischen Haupt- und Teilströmung.

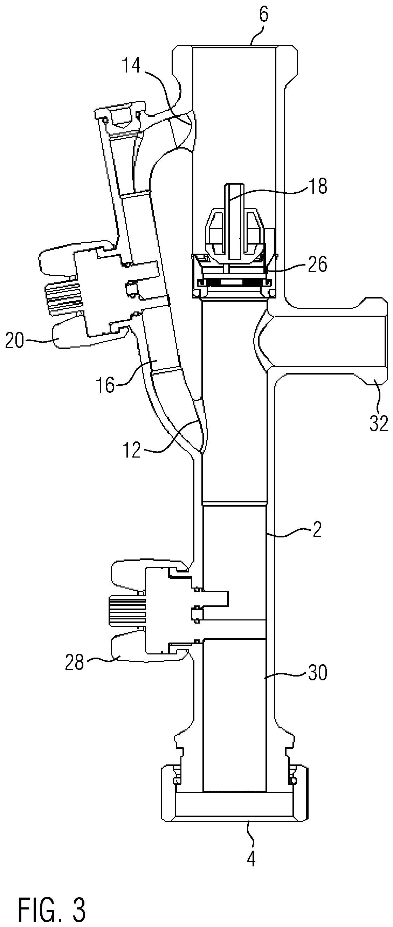

Die Figur 3 zeigt ein drittes Ausführungsbeispiel mit einer im Wesentlichen geraden Wasserleitung 2, die an einem Ende eine Einlassöffnung 4 und an einem in Längsrichtung der Wasserleitung 2 gegenüberliegenden Ende eine Auslassöffnung 6 ausbildet, welche an eine beliebige Leitung eines Trink- und Brauchwassersystems anschließbar sind.

Die Wasserleitung 2 weist an einer Mantelfläche der Wasserleitung 2 eine sich quer zur Längsrichtung der Wasserleitung 2 erstreckende Ausfädelöffnung 12 und eine sich quer zur Längsrichtung der Wasserleitung 2 erstreckende Einfädelöffnung 14 auf, wobei die Ausfädelöffnung 12 der Einlassöffnung 4 und die Einfädelöffnung 14 der Auslassöffnung 6 näher ist. Eine Bypassleitung 16 verbindet die Ausfädel- mit der Einfädelöffnung 12, 14. Auch in diesem Ausführungsbeispiel ist die Bypassleitung 16 einteilig mit der Wasserleitung 2 ausgebildet. Wie im ersten und im zweiten Ausführungsbespiel beträgt der Nenndurchmesser der Bypassleitung 16 DN 10 und der Nenndurchmesser der Wasserleitung 2 DN 32.

In der Wasserleitung 2 ist ein Strömungswiderstandselement 18 vorgesehen, das zwischen der Einfädel- und der Ausfädelöffnung 12, 14 angeordnet ist und als Strömungsteiler wirkt. Eine durch die Einlassöffnung 4 in die Wasserleitung 2 einfließende Strömung wird aufgrund des Strömungswiderstandselement 18 in eine die Wasserleitung 2 in ihrer Längsrichtung gerade durchströmende Hauptströmung und eine das Strömungswiderstandselement 18 durch die Bypassleitung 16 umgehende Teilströmung aufgeteilt. Das Strömungswiderstandselement 18 nach diesem Ausführungsbeispiel ist eine Rückflussverhinderer-Patrone 26, die derart eingerichtet ist, dass bei kleinen Volumenströmen der gesamte Volumenstrom der Wasserleitung durch die Bypassleitung 16 geleitet wird.

Wie in dem ersten und dem zweiten Ausführungsbeispiel ist in der Bypassleitung 16 ein Vortex-Durchflusssensor 20 mit einem Messbereich von 0,9 bis 15 l/min vorgesehen, der durch ein (nicht-dargestelltes) Kabel mit einem (nicht-dargestellten) Messgerät 22 verbunden ist, das einen Messumformer und eine Logikeinheit aufweist. Die von dem Durchflusssensor 20 gemessenen Signale werden an das Messgerät 22 gesendet, von dem Messumformer in einen Volumenstrom der Teilströmung umgewandelt, der von der Logikeinheit anhand einer auf dem Messgerät hinterlegten Strömungscharakteristik zwischen Haupt- und Teilströmung in einen die Wasserleitung durchfließenden Gesamtvolumenstrom umgerechnet und ausgegeben wird.

In diesem Ausführungsbeispiel ist in der Wasserleitung 2 zusätzlich ein zwischen der Einlassöffnung 4 und der Ausfädelöffnung 12 angeordneter zweiter Vortex-Durchflusssensor 28 mit einem Messbereich von 9 bis 150 l/min vorgesehen. Die Rückflussverhinderer-Patrone 26 nach diesem Ausführungsbeispiel ist dabei so eingerichtet, dass sie bei einem Gesamtvolumenstrom von ca. 10 l/min öffnet. Erreicht der Gesamtvolumenstrom ca. 10 l/min ist er allein durch den zweiten Vortex-Durchflusssensor bestimmbar. Unterhalb von 10 l/min wird der Gesamtvolumenstrom analog zum ersten Ausführungsbeispiel anhand der Strömungscharakteristik zwischen Haupt- und Teilströmung bestimmt.

Der Durchmesser der Wasserleitung 2 kann sich wie im zweiten Ausführungsbeispiel an der Ausfädelöffnung 12 verringern und an der Einfädelöffnung 14 wieder aufweiten.

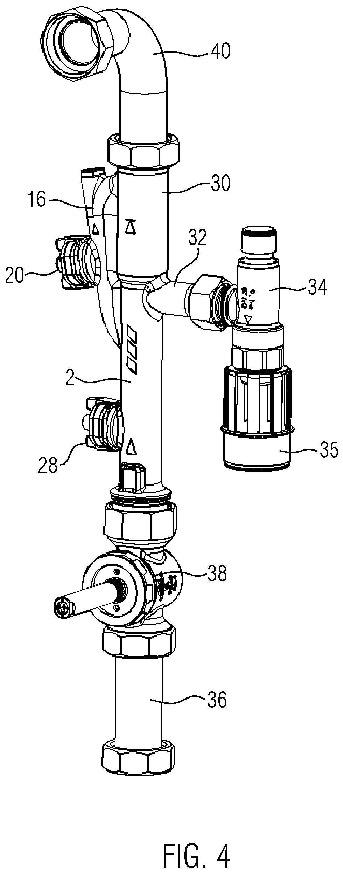

Die Wasserleitung 2 und die Bypassleitung 16 sind von einem Leitungsgehäuse 30 einteilig ausgebildet, welches gegenüberliegend zu der Bypassleitung 16 einen dem Strömungswiderstandelement 18 in Strömungsrichtung vorgelagerten Anschlussstutzen 32 zum Anschluss eines Sicherheitsventils 34 (s. Fig. 4) zur Druckentlastung ausbildet.

Das in der Figur 4 abgebildete Sicherheitsventil 34 umfasst einen Ablasskäfig 35, der sich parallel zu der Wasserleitung 2 erstreckt, die vertikal angeordnet wird. Der Ablasskäfig 35 ist in jedem Fall in einer vertikalen Orientierung angeordnet, wohingegen die Wasserleitung 2 auch nicht parallel zu dem Ablasskäfig 35, d. h. quer oder schräg zur Vertikalen verlaufen kann. Bei der Erweiterung gemäß Figur 4 ist an die Einlassöffnung 4 der Vorrichtung eine Zuführleitung 36 angeschlossen, in der ein Absperrventil 38 vorgesehen ist. An die Auslassöffnung 6 der Vorrichtung ist eine Verbindungsleitung 40 angeschlossen.

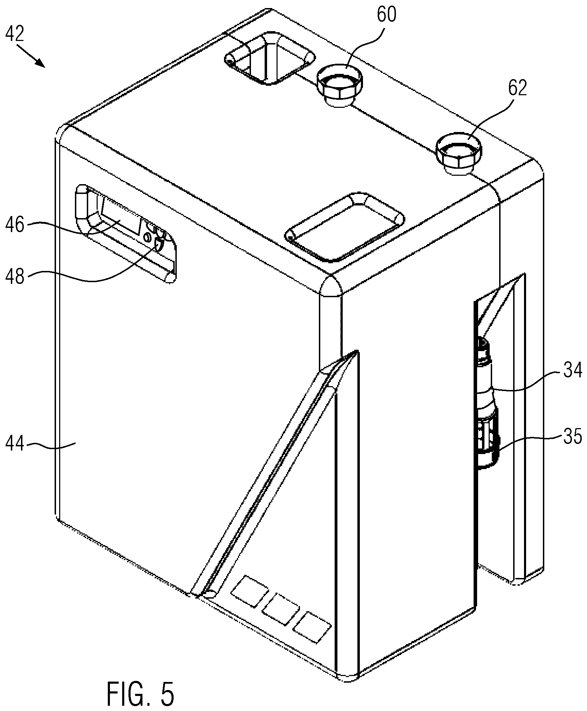

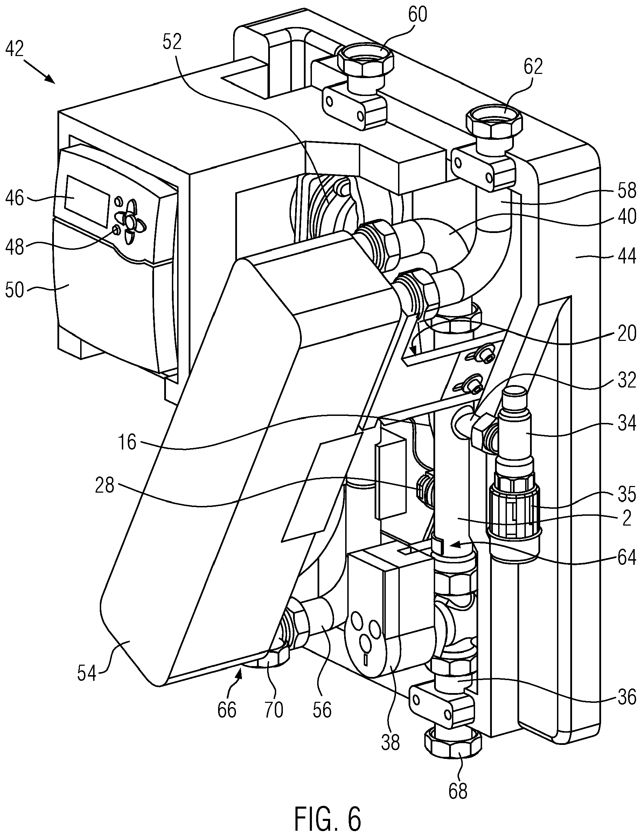

Die Figur 5 zeigt ein Modul zur Wassererwärmung 42 mit einer erfindungsgemäßen Vorrichtung, die von einem Gerätegehäuse 44 des Moduls 42 eingehaust ist. Vorliegend ist die Vorrichtung entsprechend dem dritten Ausführungsbeispiel ausgeführt. Das Sicherheitsventil 34 liegt an dem Gerätegehäuse 44 frei und entwässert außerhalb des Gerätegehäuses 44. Des Weiteren liegen an der Oberseite des Gerätegehäuses 44 zwei Anschlussstutzen und an der Unterseite des Gerätegehäuses 44 zwei (nicht abgebildete) Anschlussstutzen frei, auf die nachfolgend noch näher eingegangen wird. An der Vorderseite des Gerätegehäuses 44 liegt ein Display 46 und ein Bedienfeld 48 mit Tasten frei. Das Display 46 und das Bedienfeld 48 sind einer Steuerungseinheit 50 zugeordnet, die eine Pumpe 52 steuert (s. Fig. 6).

Wie die Figur 6 zeigt, umfasst das Modul 42 einen Plattenwärmeübertrager 54, der einen Primärbereich und einen Sekundärbereich aufweist. An den Primärbereich ist eine Zuleitung 56, die mit der Pumpe 52 zusammenwirkt um Heizungswasser als Primärmedium dem Plattenwärmeübertrager 54 zuzuführen, und eine Ableitung 58 angeschlossen, die jeweils einen Anschlussstutzen 60, 62 ausbilden, der an der Oberseite des Gerätegehäuses 44 freiliegt. Das Modul ist üblicherweise Teil einer Installation in einem Gebäude zur Übertragung von Wärme eines Primärmediums, vorliegend Heizungswasser, auf ein Sekundärmedium, vorliegend Trinkwasser, wobei das Primärmedium in einem Primärkreislauf zirkuliert, in den der Primärbereich durch Anschluss an die Zuleitung 56 und die Ableitung 58 integriert ist. Dabei wird das Primärmedium durch die Pumpe 52 zwischen einer Wärmequelle, an der das Primärmedium Wärme aufnimmt, und dem Plattenwärmeübertrager 54, in dem das Primärmedium Wärme an das Sekundärmedium abgibt, zirkuliert. Entsprechend ist der Sekundärbereich des Plattenwärmeübertragers 54 in einen Sekundärkreislauf integriert, der vorliegend warmes Trinkwasser führt, dessen Wärmeverluste in den Leitungen mit Hilfe des Plattenwärmeübertragers 54 ausgeglichen werden.

An den Sekundärbereich des Plattenwärmeübertragers 54 ist die Verbindungsleitung 40 und damit die erfindungsgemäße Vorrichtung angeschlossen, die die Zuleitung 64 für den Sekundärbereich bildet. Des Weiteren ist an den Sekundärbereich eine Ableitung 66 angeschlossen. Die Zuleitung des Sekundärbereichs umfasst die in Verbindung mit Figur 4 diskutierte, an die Einlassöffnung 4 der Vorrichtung angeschlossene Zuführleitung 36, in der ein Absperrventil 38 vorgesehen ist. Die Zu- und die Ableitung 64, 66 des Sekundärbereichs bilden jeweils einen Anschlussstutzen 68, 70 aus, der an der Unterseite des Gerätegehäuses 44 freiliegt.

Die Durchflusssensoren 20, 28 sind als Vortex-Durchflussmesser ausgebildet, die zur Übermittlung von Messdaten durch Kabel oder kabellos mit der Steuerungseinheit 50 verbindbar sind.

### Bezugszeichenliste

- 2: Wasserleitung
- 4: Einlassöffnung
- 6: Auslassöffnung
- 8, 10: Anschlussstutzen
- 12: Ausfädelöffnung
- 14: Einfädelöffnung
- 16: Bypassleitung
- 18: Strömungswiderstandelement
- 20: Durchflusssensor
- 22: Messgerät
- 24: motorgesteuertes Ventil
- 26: Rückflussverhinderer-Patrone
- 28: zweiter Durchflusssensor
- 30: Leitungsgehäuse
- 32: Anschlussstutzen
- 34: Sicherheitsventil
- 35: Ablasskäfig
- 36: Zuführleitung
- 38: Absperrventil
- 40: Verbindungsleitung
- 42: Modul zur Wassererwärmung
- 44: Gerätegehäuse
- 46: Display
- 48: Bedienfeld mit Tasten
- 50: Steuerungseinheit
- 52: Pumpe
- 54: Plattenwärmeübertrager
- 56: Zuleitung des Primärbereichs
- 58: Ableitung des Primärbereichs
- 60, 62: Anschlussstutzen
- 64: Zuleitung des Sekundärbereichs
- 66: Ableitung des Sekundärbereichs
- 68, 70: Anschlussstutzen

## Patentansprüche

1. Vorrichtung zur Volumenstrommessung eines Volumenstroms von Wasser durch eine Wasserleitung (2), umfassend
die Wasserleitung (2) mit einer Einlass- und einer Auslassöffnung (4, 6) sowie einer Ausfädel- und einer Einfädelöffnung (12, 14), die zwischen der Einlass- und der Auslassöffnung (4, 6) vorgesehen sind,
eine mit der Ausfädel- und der Einfädelöffnung (12, 14) verbundene Bypassleitung (16),
ein in der Wasserleitung (2) und zwischen der Ausfädel- und der Einfädelöffnung (12, 14) vorgesehenes Strömungswiderstandselement (18), und
einen in der Bypassleitung (16) vorgesehenen Durchflusssensor (20), **dadurch gekennzeichnet, dass**
das Strömungswiderstandselement (18) ein flexibles bewegliches Widerstandselement eines Strömungsteilers, dessen Durchtrittsfläche sich mit zunehmender Druckdifferenz über das Widerstandselement aufgrund der wirkenden Strömung vergrößert, aufweist und der Durchflusssensor (20) als Vortex-Durchflussmesser ausgebildet ist.

2. Vorrichtung nach Anspruch 1, **dadurch gekennzeichnet, dass** der Durchflusssensor (20) Bestandteil eines Durchflussmessers mit einem Messumformer ist, wobei der Messumformer die Signale des Durchflusssensors (20) als Eingangsgröße empfängt und eine Ausgangsgröße an eine Logikeinheit weiterleitet, die die Ausgangsgröße des Messumformers auf Basis einer in der Logikeinheit hinterlegten Strömungscharakteristik in einen durch die Leitung fließenden Gesamtvolumenstrom umrechnet.

3. Vorrichtung nach Anspruch 1 oder 2, **dadurch gekennzeichnet, dass** das Strömungswiderstandselement (18) ein motorgesteuertes Ventil (24) aufweist und dass die Steuerung des Ventils (24) so eingerichtet ist, dass das Ventil (24) bei Erreichen eines vorbestimmten Volumenstroms geöffnet wird und unterhalb des vorbestimmten Volumenstroms geschlossen bleibt.

4. Vorrichtung nach einem der vorherigen Ansprüche, **dadurch gekennzeichnet, dass** sich der Durchmesser der Wasserleitung (2) an der Ausfädelöffnung (12) verringert und an der Einfädelöffnung (14) wieder aufweitet.

5. Vorrichtung nach einem der vorherigen Ansprüche, **gekennzeichnet durch** einen in der Wasserleitung (2) in Strömungsrichtung vor der Ausfädelöffnung (12) oder in Strömungsrichtung nach der Einfädelöffnung (14) vorgesehenen zweiten Durchflusssensor (28).

6. Vorrichtung nach einem der vorherigen Ansprüche, **dadurch gekennzeichnet, dass** die Vorrichtung in baulicher Einheit mit einem Gerätegehäuse (44) vorgesehen ist, das die Vorrichtung gegenüber der Umgebung einhaust.

7. Vorrichtung nach einem der vorherigen Ansprüche, **dadurch gekennzeichnet, dass** die Bypassleitung (16) und die Wasserleitung (2) von einem gemeinsamen Leitungsgehäuse (30) einteilig ausgebildet sind, das vorzugsweise aus einer Kupferlegierung, insbesondere Rotguss, Edelstahl oder einem für Trinkwasser zugelassenen Kunststoff gebildet ist.

8. Vorrichtung nach Anspruch 7, **dadurch gekennzeichnet, dass** das Leitungsgehäuse (30) einen quer zu der Wasserleitung (2) abragenden und vorzugsweise der Bypassleitung (16) gegenüberliegenden Anschlussstutzen (32) zum Anschluss eines Sicherheitsventils (34) für eine Druckentlastung ausbildet.

9. Vorrichtung nach einem der vorherigen Ansprüche, **dadurch gekennzeichnet, dass** die Bypassleitung (16) frei von Zapfstellen ist und vorzugsweise nicht länger als die Wasserleitung (2) ist.

10. Vorrichtung nach einem der vorherigen Ansprüche, **dadurch gekennzeichnet, dass** die Bypassleitung (16) einen im Wesentlichen konstanten Durchmesser hat.

11. Vorrichtung nach Anspruch 5, **dadurch gekennzeichnet, dass** der zweite Durchflusssensor (28) als Vortex-Durchflussmesser ausgebildet ist.

12. Modul zur Wassererwärmung (42) mit einem Wärmeübertrager (54), der einen Primärbereich und einen Sekundarbereich aufweist, einer Pumpe (52) zur Zuführung eines Primärmediums zu dem Primärbereich, einer Vorrichtung nach einem der vorherigen Ansprüche, wobei die Vorrichtung zur Zuleitung von Wasser als Sekundärmedium mit dem Sekundärbereich des Wärmeübertragers (54) kommuniziert, und mit einer steuerungsmäßig mit der Pumpe (52) verbundenen Steuerungseinheit (50), die dazu angepasst eingerichtet ist, die Pumpe (52) in Abhängigkeit eines durch die Messsignale des oder der Durchflusssensoren (20, 28) generierten Wasserdurchflusses durch die Wasserleitung (2) zu steuern.

13. Modul (42) nach Anspruch 12 mit einer Vorrichtung nach Anspruch 5, **gekennzeichnet durch** ein Absperrventil (38), das in einer Zuführleitung (36) zu der Vorrichtung vorgesehen ist, wobei sich der Leitungsdurchmesser von dem Absperrventil (38) hin zu dem zweiten Durchflusssensor (28) nicht vergrößert.

## Claims

1. An apparatus for measuring a volumetric flow rate of water flowing through a water pipe (2), comprising
the water pipe (2) with inlet and outlet openings (4, 6) as well as outflow and inflow openings (12, 14), which are provided between the inlet and the outlet opening (4, 6),
a bypass tube (16) connected to the outflow and inflow openings (12, 14),
a flow resistance element (18) provided in the water pipe (2) and between the outflow and inflow openings (12, 14), and
a flow sensor (20) provided in the bypass tube (16), **characterized in that** the flow resistance element (18) has a flexible movable resistance element of a flow divider, the passage area of which increases with increasing pressure difference across the resistance element due to the acting flow, and the flow sensor (20) is configured as a vortex flow meter.

2. The apparatus according to claim 1, **characterized in that** the flow sensor (20) is part of a flow meter including a transducer, the transducer receiving the signals of the flow sensor (20) as an input and forwarding an output to a logic unit which converts the output of the transducer into a total volume flow flowing through the line on the basis of a flow characteristic stored in the logic unit.

3. The apparatus according to claims 1 or 2, **characterized in that** the flow resistance element (18) includes a motorized valve (24) and **in that** the valve (24) is controlled so that the valve (24) is opened when a predetermined volume flow is reached and remains closed below the predetermined volume flow.

4. The apparatus according to any one of the preceding claims, **characterized in that** the diameter of the water pipe (2) is reduced at the outflow opening (12) and widened again at the inflow opening (14).

5. The apparatus according to one of the preceding claims, **characterized by** a second flow sensor (28) provided in the water pipe (2) in the direction of flow upstream of the outflow opening (12) or in the direction of flow downstream of the inflow opening (14).

6. The apparatus according to any one of the preceding claims, **characterized in that** the apparatus is provided structurally integral with an apparatus housing (44) which shields the apparatus against the environment.

7. The apparatus according to any one of the preceding claims, **characterized in that** the bypass tube (16) and the water pipe (2) are formed in one piece by a common line housing (30) which is preferably made of a copper alloy, in particular red brass, stainless steel or a resin approved for drinking water.

8. The apparatus according to claim 7, **characterized in that** the line housing (30) forms a connection piece (32) projecting transversely to the water pipe (2) and preferably opposing the bypass tube (16) for connecting a safety valve (34) for pressure relief.

9. The apparatus according to any one of the preceding claims, **characterized in that** the bypass tube (16) is free of tapping points and is preferably not longer than the water pipe (2).

10. The apparatus according to one of the preceding claims, **characterized in that** the bypass tube (16) has a substantially constant diameter.

11. The apparatus according to claim 5, **characterized in that** the second flow sensor (28) is configured as a vortex flow meter.

12. A module for heating water (42) comprising a heat exchanger (54) including a primary region and a secondary region, a pump (52) for supplying a primary medium to the primary region, an apparatus according to any one of the preceding claims, wherein the device for supplying water as a secondary medium communicates with the secondary region of the heat exchanger (54), and a control unit (50) connected to the pump (52) for controlling and adapted to control the pump (52) as a function of a water flow through the water pipe (2) generated by the measurement signals of the flow sensors (20, 28).

13. The module (42) according to claim 12 comprising an apparatus according to claim 5, **characterized by** a shut-off valve (38) provided in a supply line (36) to the apparatus wherein the line diameter does not increase from the shut-off valve (38) towards the second flow sensor (28).

## Revendications

1. Dispositif de mesure de débit volumique d'un débit volumique d'eau à travers une conduite d'eau (2), comprenant
la conduite d'eau (2) munie d'un orifice d'entrée et d'un orifice de sortie (4, 6) ainsi que d'un orifice de détournement et d'un orifice de réintégration (12, 14) fournis entre les orifices d'entrée et de sortie (4, 6),
une conduite de dérivation (16) reliée aux orifices de détournement et de réintégration (12, 14),
un élément de résistance à l'écoulement (18) fourni dans la conduite d'eau (2) et entre les orifices de détournement et de réintégration (12, 14), et
un capteur de débit (20) fourni dans la conduite de dérivation (16), **caractérisé en ce que**
l'élément de résistance à l'écoulement (18) présente un élément de résistance mobile flexible d'un diviseur d'écoulement, dont la surface de passage augmente avec l'augmentation de la différence de pression sur l'élément de résistance en raison de l'action de l'écoulement, et le capteur de débit (20) est réalisé sous la forme d'un débitmètre à vortex.

2. Dispositif selon la revendication 1, **caractérisé en ce que** le capteur de débit (20) fait partie d'un débitmètre muni d'un convertisseur de mesure, dans lequel le convertisseur de mesure reçoit les signaux du capteur de débit (20) en tant que valeur d'entrée et transmet une valeur de sortie à une unité logique qui convertit la valeur de sortie du convertisseur de mesure en un débit volumique total circulant à travers la conduite sur la base d'une caractéristique d'écoulement enregistrée dans l'unité logique.

3. Dispositif selon la revendication 1 ou 2, **caractérisé en ce que** l'élément de résistance à l'écoulement (18) présente une vanne (24) commandée par moteur et **en ce que** la commande de la vanne (24) est ajustée de sorte que la vanne (24) est ouverte lorsqu'un débit volumique prédéterminé est atteint et reste fermée en dessous du débit volumique prédéterminé.

4. Dispositif selon l'une quelconque des revendications précédentes, **caractérisé en ce que** le diamètre de la conduite d'eau (2) diminue au niveau de l'orifice de détournement (12) et augmente à nouveau au niveau de l'orifice de réintégration (14).

5. Dispositif selon l'une quelconque des revendications précédentes, **caractérisé par** un second capteur de débit (28) fourni dans la conduite d'eau (2) avant l'orifice de détournement (12) dans le sens de l'écoulement ou après l'orifice de réintégration (14) dans le sens de l'écoulement.

6. Dispositif selon l'une quelconque des revendications précédentes, **caractérisé en ce que** le dispositif est fourni en cohérence de fabrication avec un boîtier d'appareil (44) abritant le dispositif par rapport à l'environnement.

7. Dispositif selon l'une quelconque des revendications précédentes, **caractérisé en ce que** la conduite de dérivation (16) et la conduite d'eau (2) sont réalisées d'un seul tenant sous la forme d'un corps de conduite (30) commun constitué de manière préférée d'un alliage de cuivre, en particulier du bronze, d'acier inoxydable ou d'une matière plastique autorisée pour l'eau potable.

8. Dispositif selon la revendication 7, **caractérisé en ce que** le boîtier de conduite (30) forme une tubulure de raccordement (32) faisant saillie transversalement par rapport à la conduite d'eau (2) et située de manière préférée à l'opposé de la conduite de dérivation (16) afin de raccorder une soupape de sécurité (34) destinée à une décharge de pression.

9. Dispositif selon l'une quelconque des revendications précédentes, **caractérisé en ce que** la conduite de dérivation (16) est exempte de points de prise d'eau et n'est de manière préférée pas plus longue que la conduite d'eau (2).

10. Dispositif selon l'une quelconque des revendications précédentes, **caractérisé en ce que** la conduite de dérivation (16) a un diamètre essentiellement constant.

11. Dispositif selon la revendication 5, **caractérisé en ce que** le second capteur de débit (28) est réalisé sous la forme d'un débitmètre à vortex.

12. Module de chauffage d'eau (42) comprenant un échangeur de chaleur (54) présentant une zone primaire et une zone secondaire, une pompe (52) permettant d'amener un milieu primaire vers la zone primaire, un dispositif selon l'une quelconque des revendications précédentes, dans lequel le dispositif permettant d'amener de l'eau en tant que milieu secondaire communique avec la zone secondaire de l'échangeur de chaleur (54), et comprenant une unité de commande (50) reliée à la pompe (52) de manière à la commander et conçue pour commander la pompe (52) en fonction d'un débit d'eau traversant la conduite d'eau (2) généré grâce aux signaux de mesure du ou des capteur(s) de débit (20, 28).

13. Module (42) selon la revendication 12 comprenant un dispositif selon la revendication 5, **caractérisé par** une vanne d'arrêt (38) fournie dans une conduite d'amenée (36) menant au dispositif, dans lequel le diamètre de conduite n'augmente pas depuis la vanne d'arrêt (38) jusqu'au second capteur de débit (28).
